## Europäisches Patentamt
## European Patent Office
## Office européen des brevets

(19)

(11) Veröffentlichungsnummer : **0 332 972 B1**

(12) # EUROPÄISCHE PATENTSCHRIFT

(45) Veröffentlichungstag der Patentschrift :
**27.05.92 Patentblatt 92/22**

(21) Anmeldenummer : **89103912.5**

(22) Anmeldetag : **06.03.89**

(51) Int. Cl.$^5$ : **G06F 5/06,** G06F 13/40

(54) **Verfahren zur Datenübertragung und Anordnung zur Durchführung des Verfahrens.**

(30) Priorität : **15.03.88 DE 3808640**

(43) Veröffentlichungstag der Anmeldung :
**20.09.89 Patentblatt 89/38**

(45) Bekanntmachung des Hinweises auf die
Patenterteilung :
**27.05.92 Patentblatt 92/22**

(84) Benannte Vertragsstaaten :
**AT BE CH DE FR GB IT LI LU NL SE**

(56) Entgegenhaltungen :
**DE-A- 2 027 567**

(56) Entgegenhaltungen :
**FR-A- 2 582 423**
**US-A- 3 789 366**
**US-A- 4 005 389**
**COMPUTER DESIGN, Band 21, Nr. 1, Januar
1982, Seiten 155-164, Winchester, Massachusetts, US; J.P. ALTNETHER: "Betterprocessor
performance via global memory"**

(73) Patentinhaber : **SIEMENS
AKTIENGESELLSCHAFT
Wittelsbacherplatz 2
W-8000 München 2 (DE)**

(72) Erfinder : **Lechner, Alexander, Dr.
Dietrichsteiner Strasse 27
A-9583 Faak/See (AT)**

EP 0 332 972 B1

## Beschreibung

Die Erfindung betrifft ein Verfahren zur Datenübertragung und eine Anordnung zur Durchführung des Verfahrens nach den Oberbegriffen der Patentansprüche 1 und 7.

In digitalen Datenübertragungssystemen tritt oft das Problem auf, daß Daten zwischen Stationen übertragen werden müssen, die mit unterschiedlichen Geschwindigkeiten arbeiten. Datensender oder Datenempfänger ist beispielsweise ein Prozessor, der über einen schnellen Prozessorbus mit langsamer arbeitenden Peripherieeinheiten in Verbindung steht. Ein Beispiel ist ein Datenacquisitionssystem, bei dem schnell anfallende Daten zunächst zwischengespeichert werden müssen, um anschließend über den schnellen Prozessorbus einer weiteren Verarbeitung zugeführt zu werden. In allen Fällen fallen Daten mit höherer Geschwindigkeit an, als sie weiterverarbeitet werden können, so daß zunächst eine Zwischenspeicherung bestimmter Datenmengen erforderlich ist. Es ist bekannt, für diese Datenmengen schnelle Speicher, sogenannte Cache, zu verwenden. Diese Caches werden meist aus ECL-Speichern aufgebaut, für die eine Parallelisierung von Speichereinheiten nicht erforderlich ist. Allerdings sind die Größen der Caches durch ECL-Speicher stark limitiert.

Beim Übergang zu schnelleren Prozessorbussen mit höheren Taktraten und weniger Takten pro Buszyklus und bei Verwendung von dynamischen Speichern mit wahlweisem Zugriff (DRAM) als Prozessorspeicher, die neue, superschnelle Zugriffsmöglichkeiten, z.B. durch den Page- und Nibblemode, bieten sowie bei einem Ansteigen der Größe der schnellen Speicher (Caches) sind neue Speicherarchitekturen und Datenübertragungsverfahren erforderlich. Es ist bekannt, für den Aufbau des schnellen Speichers eine Parallelisierung mit parallel angeordneten Kanälen vorzusehen, um die Datenrate zu senken. Damit ist es möglich, die Ep 1 Ht/26.02.1988

Geschwindigkeitsanforderung an die einzelnen Speicherkanäle ohne Beeinträchtigung der Gesamt-Arbeitsgeschwindigkeit des Speichers zu reduzieren.

Nachfolgend wird beispielshaft ein Datenacquisitionssystem beschrieben, in dem externe Daten mit höherer Geschwindigkeit aufgenommen werden, als sie weiterverarbeitet werden können. Beispiele für diese Anwendungsfälle sind schnelle Digitalspeicheroszilloskope, Transientenrekorder oder hochauflösende Bilderfassungssysteme. Die anfallenden Daten werden in einem Speicher mit Parallelisierung (Cache) zwischengespeichert und anschließend einem Prozessorsystem zugeführt. Die Parallelisierung und Abspeicherung der über einen seriellen Datenpfad mit hoher Geschwindigkeit anfallenden Daten kann mit Hilfe von Demultiplexer-Bausteinen, z.B. einem Data-Acquisition-Shift-Register, geschehen. Es wird ausdrücklich herausgestellt, daß die nachfolgend beschriebene Erfindung nicht auf Datenaquisitionssysteme, sondern in gleicher Weise auf Datentransmissionssysteme anwendbar ist, in denen Daten über einen schnellen Prozessorbus übertragen werden, zwischengespeichert werden und dann in Peripherieeinheiten weiterverarbeitet werden.

In einem Datenacquisitionssystem der geschilderten Art fallen auf einem schnellen, n-Bit breiten, seriellen Datenpfad, z.B. 8 Bit bei 100 MHz Übertragungsrate, Daten an, die in N-parallele Kanäle eines Speichers mit Hilfe von Demultiplexern aufgeteilt werden. Beträgt die Anzahl N der parallelen Kanäle beispielsweise 12, dann können im Speicher (Cache) langsame Speicher mit wahlweisem Zugriff, z.B. statische CMOS-RAMs mit typisch 100 ns Zugriffszeit verwendet werden. Die Daten sollen anschließend über einen schnellen Prozessorbus, der aus einem Kontrollbus, einem Adreßbus und einem Datenbus besteht, in einen Systemspeicher, der üblicherweise aus dynamischen Speichern mit wahlweisem Zugriff (DRAM) besteht, übertragen werden. Die Datenübertragung wird von einer Steuereinrichtung, z.B. einem Data-Acquisition-Controller (DACO), gesteuert, die die Adreß- und Kontrolleitungen für die Speicher und die Auswahlsignale für die Kanäle erzeugt. Die einzelnen Speicherkanäle sind über zu geordnete steuerbare Verbindungsglieder mit dem Datenbus verbunden. Die steuerbaren Verbindungsglieder sind z.B. Bustreiber mit drei Steuerzuständen (Tristate-Bustreiber). Auf diese Weise können die zu speichernden Daten, die z.B. von einem schnellen A/D-Umsetzer seriell angeliefert werden, fortlaufend auf die einzelnen Kanäle bzw. Speicheradressen des Speichers geschrieben werden, und anschließend kann für jede Speicheradresse mit Hilfe der Auswahlsignale der Speicherkanal und der zugehörige Bustreiber angesteuert werden, um die Daten in den Datenbus des Bussystems zu transferieren.

Die Steuereinrichtung (DACO) muß so arbeiten, daß eine möglichst schnelle Übertragung zwischen dem Speicher und dem Prozessor erreicht wird. Es ist bekannt, hierfür einen direkten Speicherzugang (Direct Memory Access, DMA) vorzusehen, d.h. die Steuereinrichtung muß während der Übertragung fortlaufend Kanäle bzw. Speicheradressen des Speichers ansprechen, um dem Datenempfänger, z.B. dem Prozessor einen kontinuierlichen Datenfluß anzubieten. In diesem Fall stellt das gesamte Datenaquisitionssystem für den Prozessor ein peripheres Eingabegerät dar. Es ist weiterhin bekannt, die Übertragung der Kanäle des Speichers in einem Buszyklus (Single Cycle Transfer) vorzusehen, um die Übertragung zu beschleunigen. Dabei wird der Lese- und Schreibvorgang in einem Buszyklus durchgeführt. Diese Möglichkeit ist insbesondere dann gegeben, wenn die zu übertragenden Daten bei der Übertragung weder kontrolliert noch modifiziert werden müssen.

Sind die bei einem Datenaquisitionssystem zu lesenden bzw. bei einem Datentransmissionssystem zu beschreibenden Speicher zu langsam für den normalen Buszyklus, so muß dieser durch Einfügen von Wartezuständen verlängert werden. Bekannte Systeme stellen hierfür Bereitschaftssignale (Handshake-Signale), z.B. das Signal READY in Multibus und DTACK in VME-Bussystemen, zur Verfügung. Dabei werden mit Hilfe der mit dem Prozessor verbundenen Steuereinrichtung bei jedem Zugriff auf einen Speicherkanal Wartezustände in den Buszyklus eingefügt, so daß der Datenbus quasi die Zugriffszeit auf den Speicherkanal abwartet und das Auslesen aus dem Speicherkanal für jede Adresse ordnungsgemäß erfolgen kann. In einem Speicher mit parallel angeordneten Kanälen senkt dieses Verfahren selbstverständlich die Datenübertragungsgeschwindigkeit.

Der Erfindung liegt die Aufgabe zugrunde, die Anzahl der erforderlichen Wartezustände bei einem Datenübertragungsverfahren und einer Anordnung der geschilderten Art zu verringern und somit die Datenübertragungsgeschwindigkeit zu erhöhen.

Diese Aufgabe wird bei einem Verfahren und einer Anordnung der eingangs genannten Art erfindungsgemäß durch die Merkmale der kennzeichnenden Teile der Patentansprüche 1 und 7 gelöst.

Die Erfindung hat den Vorteil, daß nur beim Auslesen einer jeden neuen Adresse bzw. beim Einschreiben in jede neue Adresse die Zugriffszeit des Speichers bzw. der Speicherkanäle berücksichtigt werden muß und daß das Auslesen der weiteren Kanäle aus dem Zeilenspeicher schnell und ohne Wartezustände durchgeführt werden kann. Die Steuereinrichtung hat nurmehr die Aufgabe, durch die Steuerung des entsprechenden Bereitschaftssignals die erforderliche Anzahl von Wartezuständen in jedem Buszyklus nach einem Adreßwechsel (dynamisch) einzufügen. Die Anzahl der erforderlichen Wartezustände wird deshalb erfindungsgemäß entsprechend der reziproken Zahl der Kanäle des Speichers reduziert.

Ausgestaltungen des Erfindungsgedankens sind in Unteransprüchen gekennzeichnet.

Die Erfindung wird im folgenden anhand von in den Figuren der Zeichnung dargestellten Auführungsbeispielen näher erläutert. Darum sind gleiche Elemente mit gleichen Bezugszeichen versehen. Es zeigt:

FIG 1 ein schematisches Bild eines Datenaquisitionssystems,
FIG 2 ein Signaldiagramm mit dynamischer Einfügung von Wartezuständen in ein System gemäß FIG 1,
FIG 3 ein schematisches Bild eines Datentransmissionssystems,
FIG 4 ein Signaldiagramm mit dynamischer Einfügung von Wartezuständen in ein System gemäß FIG 3 und
FIG 5 ein Prizipschaltbild zur Realisierung eines Generators für die Erzeugung dynamischer Wartezustände.

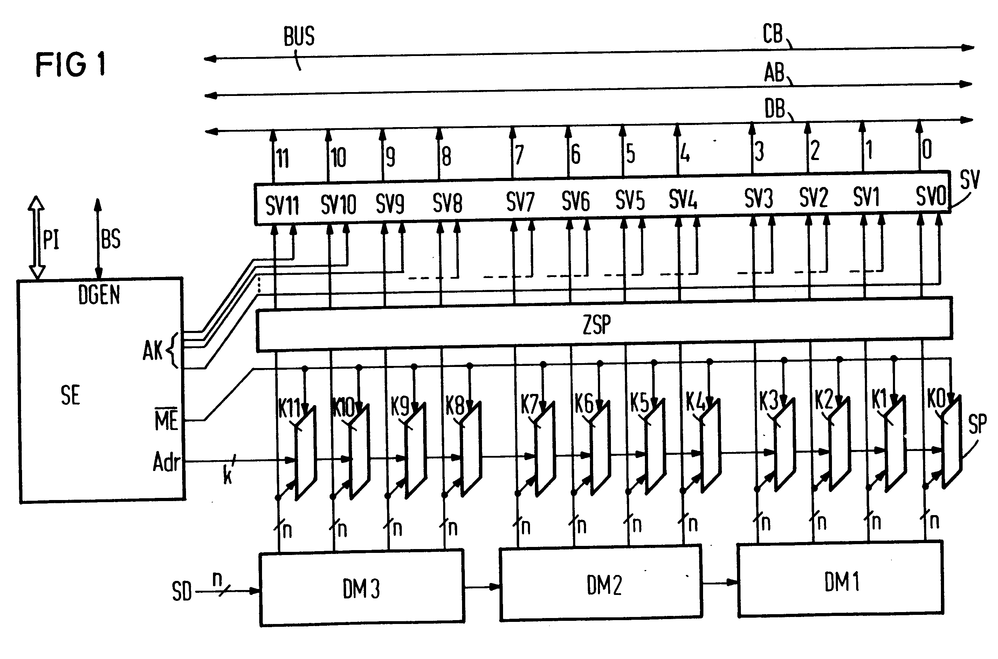

Gemäß FIG 1 ist ein n-Bit breiter serieller Datenpfad SD zur Aufteilung der seriell anfallenden Daten in N = 12 parallele Kanäle mit drei hintereinanderliegenden Multiplexern DM1 bis DM3 verbunden. Jeder der Ausgänge der Demultiplexer ist mit einem Kanal Ki, i = 0...11, des Speichers (Cache) SP und mit einem jeden Kanal zugeordneten steuerbaren Verbindungsglied SVi, i = 0...11, der steuerbaren Verbindungsglieder SV über einen n-Bit breiten Datenpfad verbunden. Die Ausgänge der steuerbaren Verbindungsglieder SV bzw. SVi sind an den Datenbus DB eines Busses BUS angeschlossen, zu dem noch ein Adreßbus AB und ein Kontrollbus CB gehören.

Zur Steuerung der Datenübertragung zwischen den Kanälen des Speichers SP und einem am Bus BUS angeschossenen, nicht dargestellten Datenempfängers ist eine Steuereinrichtung SE vorgesehen, die über Leitungen PI mit dem Datenempfänger bzw. mit einem Prozessor über eine Schnittstelle (Interface) in Verbindung steht. Weiterhin sind Adreßausgänge Adr der Steuereinrichtung über k-Bit breite Adreßleitungen mit den Speicherkanälen K0 bis K11 des Speichers SP bzw. mit entsprechenden Adreßdecodern verbunden.

Ein weiterer Ausgang der Steuereinrichtung SE ist für die Aktivierung der Kanäle des Speichers SP vorgesehen. Im Ausführungsbeispiel ist dieser Ausgang über eine gemeinsame Aktivierungsleitung gleichzeitig mit den Kanälen K0 bis K11 verbunden, über die das Signal $\overline{ME}$ (Memory Enable) übertragen werden kann. Jedes der steuerbaren Verbindungsglieder SV0 bis SV11 ist über eine zugeordnete Verbindungsleitung mit Auswahlkanälen AK der Steuereinrichtung verbunden, über die Auswahlsignale übertragen werden könne. Die steuerbaren Verbindungsglieder sind vorzugsweise Bustreiber mit drei steuerbaren Zuständen. Weiterhin wird von einem dynamischen Generator DGEN der Steuereinrichtung SE ein Bereitschaftssignal BS erzeugt, mit dessen Hilfe Wartezustände in den Buszyklus eingefügt werden können.

Erfindungsgemäß ist nun vorgesehen, zwischen dem Speicher SP und dem Bus BUS eine einzeilige Zwischenspeicherung der zu übertragenden Daten vorzusehen. Im Ausführungsbeispiel der FIG 1 ist dieser Zwischenspeicher ZSP zwischen den Kanälen K0 bis K11 des Speichers SP und den steuerbaren Verbindungsgliedern SV0 bis SV11 der Tristate-Bustreiber SV vorgesehen. Die Verringerung der Anzahl von erforderlichen Wartezuständen gelingt mit Hilfe dieses Zwischenspeichers ZSP sowie eines dynamischen Generators DGEN in der Steuereinrichtung zur Erzeugung des Bereitschaftssignals BS. Da für jede Speicheradresse der Reihe nach alle Kanäle des Speichers SP angesprochen werden müssen, können die Daten aller Kanäle nach jedem Wechsel der Speicheradresse sofort in den Zeilenspeicher ZSP übertragen werden. Nur beim ersten Auslesen einer jeden neuen Adresse muß die Zugriffszeit der Speicherkanäle bzw. des Speichers SP berücksichtigt werden. Das Auslesen der Daten der weiteren Kanäle aus dem Zeilenspeicher kann schnell und deshalb ohne Wartezustände durchgeführt werden.

Die Erläuterung des erfindungsgemäßen Verfahrens bzw. der Funktion der Anordnung gemäß FIG 1 wird mit Hilfe des Datendiagramms veranschaulicht. In jedem Buszyklus BZ werden nacheinander die einzelnen Kanäle K0 bis K11 bzw. 0 bis 11 des Speichers SP angesprochen. Bei einem Wechsel der Speicheradresse muß direkt nach dem Wechsel, d.h. bei der Übertragung des ersten Datenwortes der neuen Speicheradresse im Kanal K0 eine Anzahl von Wartezuständen eingefügt werden, die m Taktperioden entspricht. Diese Wartezustände berücksichtigen die Zugriffszeit des Speicherkanals. Für die weiteren Speicherkanäle brauchen keine weiteren Wartezustände eingefügt werden, da der Speicher SP auf allen Kanälen bei jedem Adreßwechsel gleichzeitig aktiviert wird und die zu übertragenden Daten im Zwischenspeicher ZSP lediglich zwischengespeichert werden. Auf diese Weise werden die Wartezustände WZ dynamisch, d.h. nur dann, wenn sie erforderlich sind, in den Buszyklus eingefügt. Im Ausführungsbeispiel gemäß FIG 1 kann die Anzahl der erforderlichen Wartezustände WZ daher entsprechend der Kanalzahl N = 12 auf 1/12 reduziert werden.

Bei einem Datenacquisitionssystem gemäß FIG 1 braucht für die Zwischenspeicherung kein physikalischer Zwischenspeicher ZSP vorgesehen werden, vielmehr kann der Zeilenspeicher durch Aktivieren des gesamten Speichers SP an der jeweiligen Adresse Adr mit Hilfe des Signals $\overline{ME}$ realisiert werden. Mit der gleichzeitigen Aktivierung des Speichers auf allen Kanälen stehen unter Berücksichtigung der Zugriffszeit die zu übertragenden Daten bereits an den steuerbaren Verbindungsgliedern SV0 bis SV11 an. Nach der erforderlichen Einfügung von Wartezuständen WZ ist es nurmehr erforderlich, mit Hilfe der über die Auswahlkanäle AK übertragenen Auswahlsignale die steuerbaren Verbindungsglieder SV so anzusteuern, daß nacheinander alle Kanäle auf den Datenbus DB geschaltet werden.

Gemäß dem Ausführungsbeispiel der FIG 3 ist eine Datenübertragung in umgekehrter Richtung, d.h. ein Datentransmissionssystem mit Einschreiben von Daten aus dem Datenbus DB is die Kanäle des Speichers SP dargestellt. Gegenüber dem Ausführungsbeispiel gemäß FIG 1 bestehen folgende Unterschiede. In einem Datentransmissionssystem ist erfindungsgemäß ein physikalischer Zwischenspeicher vorhanden, der durch Speicherelemente der steuerbaren Verbindungsglieder realisiert ist und durch das Bezugszeichen SVS bzw. kanalweise SVS0 bis SVS11 zum Ausdruck kommt. Auf diese Weise werden die über den Datenbus DB innerhalb eines Buszyklus schnell anfallenden Daten kanalweise zwischengespeichert und anschließend an die Speicherkanäle des Speichers SP durchgeschaltet. Für die steuerbaren Verbindungsglieder mit Speicherelementen kommen vorzugsweise Tristate-Bus-Latch in Frage.

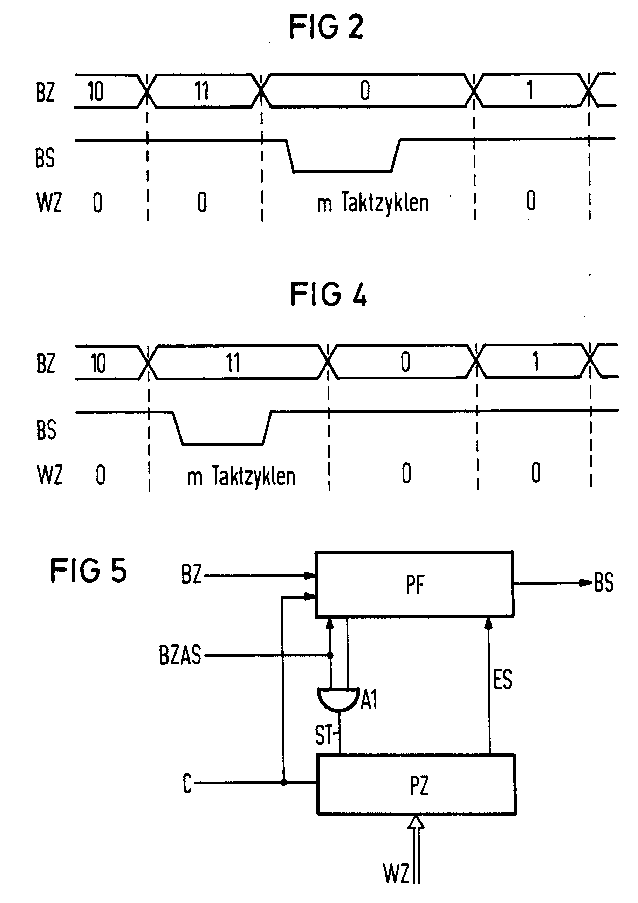

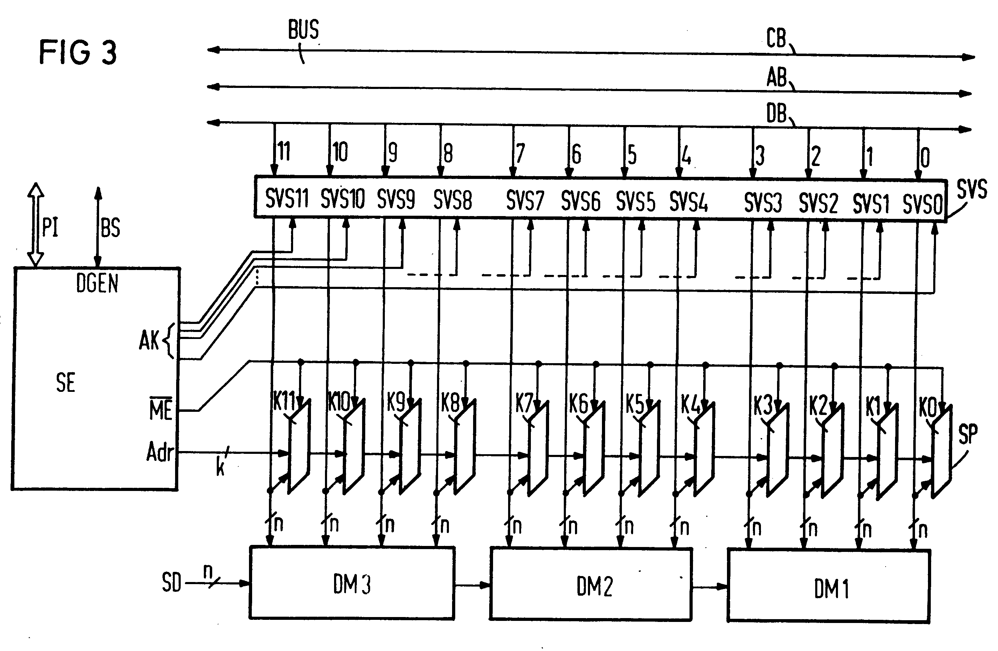

Die Übertragung bei einem System gemäß FIG 3 wird anhand des Datendiagramms gemäß FIG 4 näher erläutert. Bei der Übertragung der Daten über den Datenbus DB während eines Buszyklus BZ muß während der Übertragung des letzten Kanals vor jedem Wechsel der Speicheradresse die Zugriffszeit des Speicherkanals derart berücksichtigt werden, daß in dem Buszyklus BZ mit Hilfe des Bereitschaftssignals BS eine entsprechende Anzahl von Wartezuständen WZ, nämlich beispielsweise m Taktperioden, eingefügt werden. Bei Datentransmissionssystemen müssen also die Wartezustände vor jedem Wechsel der Speicheradresse des Speichers SP eingefügt werden und nicht, wie bei Datenacquisitionssystemen, direkt nach jedem Wechsel der Speicheradresse.

FIG 5 zeigt ein Ausführungsbeispiel für die Realisierung des dynamischen Generators DGEN zur Erzeugung des Bereitschaftssignals BS. Die Anzahl der erforderlichen Wartezustände WZ wird in einem programmierbaren Zähler PZ gespeichert, der vom Systemtakt C angesteuert wird. Für die Zeitsteuerung innerhalb eines Buszyklus ist eine Pulsformerstufe PF erforderlich, die spezifisch für das jeweilige Prozessorsystem ausgeführt werden muß.

Die Ausführung der jeweiligen Pulsformerstufe unterliegt dem Können eines Durchschnittsfachmanns und gehört zum Stand der Technik.

Im Ausführungsbeispiel gemäß FIG 5 wird die Pulsformerstufe PF vom Buszyklus BZ und dem Systemtakt C gesteuert und stellt das Bereitschaftssignal BS für alle Buszyklen zur Verfügung. Bei der Übertragung des ersten Datenwortes in einem Datenacquisitionssystem bzw. des letzten Datenwortes in einem Datentransmissionssystem bezüglich jeder Speicheradresse wird ein Signal "Buszyklus-Auswahlsignal BZAS" aktiviert. Dieses Signal bewirkt die Unterbrechung des Bereitschaftssignals BS in der Pulsformerstufe und gleichzeitig mit Hilfe eines UND-Gatters AI, dessen zweiter Eingang von der Pulsformerstufe PF gesteuert wird und das ein Startsignal ST abgibt für den Start des programmierbaren Zählers PZ und damit das Einfügen der entsprechenden m Taktzyklen in das Bereitschaftssignal BS durch den Pulsformer. Mit dem Erreichen der erforderlichen Anzahl von Wartezuständen WZ gibt der programmierbare Zähler PZ eine Endesignal ES an die Pulsformerstufe PF, die dann wieder das Bereitschaftssignal BS erzeugt, so daß der Buszyklus ordnungsgemäß beendet werden kann.

## Patentansprüche

1. Verfahren zur Datenübertragung zwischen einem Datensender und einem Datenempfänger über einen Bus (BUS) mit Hilfe einer Steuereinrichtung (SE), die für eine Datenübertragung in einem Buszyklus Adreß- und Kontrollsignale (Adr, $\overline{ME}$) sowie Auswahlsignale (AK) erzeugt, mit denen einerseits parallel angeordnete Kanäle eines als Datensender bzw. Datenempfänger dienenden Speichers (SP) über zugeordnete steuerbare Verbindungsglieder (SVi) nacheinander mit dem Bus verbindbar sind und andererseits der Buszyklus durch Einfügen von Wartezuständen verlängerbar ist, **dadurch gekennzeichnet**, daß eine einzeilige Zwischenspeicherung (ZSP) der zu übertragenden Daten zwischen dem Bus (BUS) und dem Speicher (K0 bis K11, SP) vorgesehen ist und die Wartezustände (WZ) dynamisch, d.h. nach bzw. vor einem Adreßwechsel, in jeden Buszyklus (BZ) eingefügt werden.

2. Verfahren nach Anspruch 1, **dadurch gekennzeichnet,** daß alle Kanäle (K0 bis K11) des Speichers (SP) nach einem Wechsel der Speicheradresse (Adr) gleichzeitig aktiviert ($\overline{ME}$) werden.

3. Verfahren nach Anspruch 1 oder 2, **dadurch gekennzeichnet,** daß beim Einsatz des Speichers (SP) als Datensender nach einem Wechsel der Speicheradresse (Adr) die zu übertragenden Daten aller Kanäle (K0 bis K11) an die steuerbaren Verbindungsglieder (SV0 bis SV11, SV) ausgegeben werden, die dann nacheinander mit Hilfe der Auswahlsignale mit dem Bus (BUS) verbindbar sind und daß die Wartezustände (WZ) direkt nach jedem Wechsel der Speicheradresse (Adr) eingefügt werden.

4. Verfahren nach Anspruch 1 oder 2, **dadurch gekennzeichnet,** daß beim Einsatz des Speichers (SP) als Datenempfänger die zu übertragenden Daten in Speicherelemente der steuerbaren Verbindungsglieder (SVS0 bis SVS11, SVS) zwischengespeichert werden und dann nacheinander in den Kanälen (K0 bis K11) des Speichers (SP) abgespeichert werden und daß die Wartezustände (WZ) direkt vor jedem Wechsel der Speicher adresse (Adr) eingefügt werden.

5. Verfahren nach einem der Ansprüche 1 oder 4, **dadurch gekennzeichnet,** daß beim Einsatz des Speichers (SP) als Datensender während der Übertragung des ersten, bzw. beim Einsatz des Speichers (SP) als Datenempfänger während der Übertragung des letzten Datenkanals jeder Speicheradresse (Adr) ein Steuersignal (BZAS, ST, ES) erzeugt wird, das in einer vom Takt (C) und vom Buszyklus (BZ) gesteuerten Pulsformerstufe (PZ) zur Abgabe eines Bereitschaftssignals (BS) für die Datenübertragung das Einfügen von Wartezuständen (WZ) in das Bereitschaftssignal (BS) bewirkt.

6. Verfahren nach Anspruch 1 bis 5, **dadurch gekennzeichnet,** daß das Steuersignal (BZAS, BT) einen taktgesteuerten Zähler (PZ) startet, der nach einer den Wartezuständen (WZ) entsprechenden Anzahl Taktzyklen (Z) ein Endesignal (ES) an die Pulsformerstufe (PF) abgibt, so daß während der Zähldauer kein Bereitschaftssignal (BS) erzeugt werden kann.

7. Anordnung zur Durchführung des Verfahrens nach einem der vorhergehenden Ansprüche, **dadurch gekennzeichnet,** daß die Steuereinrichtung (SE) mit den Kanälen (K0 bis K11) des Speichers (SP) über eine gemeinsame Aktivierungsleitung und mit den steuerbaren Verbindungsgliedern (SV, SVS), die jeweils drei steuerbare Zustände einnehmen können, über je eine Auswahlleitung (AK) verbunden ist und daß die Steuereinrichtung (SE) eine vom Takt (C) und vom Buszyklus (BZ) gesteuerte Pulsformerstufe (PF) und einen taktgesteuerten programmierbaren Zähler (PZ) aufweist, die mit Hilfe einer Verknüpfungslogik (AI) so verbunden sind, daß die Pulsformerstufe (PF) während der Zähldauer des Zählers (PZ) kein Bereitschaftssignal (BS) abgeben kann.

8. Anordnung nach Anspruch 7, **dadurch gekennzeichnet,** daß beim Einsatz des Speichers (SP) als Datenempfänger die steuerbaren Verbindungsglieder (SVS0 bis SVS11, SVS) jeweils ein Speicherelement aufweisen.

## Claims

1. Method for data transfer between a data transmitter and a data receiver via a bus (BUS) with the aid of a control device (SE) which generates address and control signals (Adr, $\overline{ME}$) as well as selection signals (AK) for a data transfer in one bus cycle, by means of which signals it is possible on the one hand to connect parallel-arranged channels of a memory (SP) serving as data transmitter or data receiver via associated controllable connecting elements (SVi) successively to the bus and on the other hand to lengthen the bus cycle by inserting wait states, characterised in that a single-line temporary storage (ZSP) of the data to be transferred is provided between the bus (BUS) and the memory (K0 to K11, SP), and the wait states (WZ) are inserted into each bus cycle (BZ) dynamically, that is to say after or before an address change.

2. Method according to Claim 1, characterised in that all channels (K0 to K11) of the memory (SP) are activated (ME) simultaneously after a change of the memory address (Adr).

3. Method according to Claim 1 or 2, characterised in that, when the memory (SP) is used as data transmitter, after a change of the memory address (Adr) the data of all channels (K0 to K11) to be transferred are output to the controllable connecting elements (SV0 to SV11, SV), which can then be connected successively to the bus (BUS) with the aid of the selection signals, and in that the wait states (WZ) are inserted directly after each change of the memory address (Adr).

4. Method according to Claim 1 or 2, characterised in that, when the memory (SP) is used as data receiver, the data to be transferred are temporarily stored in memory elements of the controllable connecting elements (SVS0 to SVS11, SVS) and are then successively stored in the channels (K0 to K11) of the memory (SP), and in that the wait states (WZ) are inserted directly before each change of the memory address (Adr).

5. Method according to one of Claims 1 to 4, characterised in that a control signal (BZAS, ST, ES) is generated during the transfer of the first data channel of each memory address (Adr) when the memory (SP) is used as data transmitter or, respectively, during the transfer of the last data channel of each memory address (Adr) when the memory (SP) is used as data receiver, which control signal brings about, in a pulse shaping stage (PZ) controlled by the clock (C) and by the bus cycle (BZ) for the output of a ready signal (BS) for the data transfer, the insertion of wait states (WZ) into the ready signal (BS).

6. Method according to Claims 1 to 5, characterised in that the control signal (BZAS, BT) starts a clock-controlled counter (PZ) which outputs an end signal (ES) to the pulse shaping stage (PF) after a number of clock cycles (Z) corresponding to the wait states (WZ) so that no ready signal (BS) can be generated during the counting period.

7. Arrangement for carrying out the method according to one of the preceding claims, characterised in that the control device (SE) is connected to the channels (K0 to K11) of the memory (SP) via a common activation line and to the controllable connecting elements (SV, SVS), each of which can assume three controllable states, via a selection line (AK) in each case, and in that the control device (SE) has a pulse shaping stage (PF) controlled by the clock (C) and by the bus cycle (BZ), and a clock-controlled programmable counter (PZ), which are connected with the aid of a logic gate (A1) in such a way that the pulse shaping stage (PF) cannot output a ready signal (BS) during the counting period of the counter (PZ).

8. Arrangement according to Claim 7, characterised in that, when the memory (SP) is used as data receiver, the controllable connecting elements (SVS0 to SVS11, SVS) have one memory element in each case.

## Revendications

1. Procédé pour la transmission de données entre un émetteur de données et un récepteur de données par l'intermédiaire d'un bus (BUS), à l'aide d'un dispositif de commande (SE), qui produit, pour une transmission de données dans un cycle du bus, des signaux d'adresse et de commande (Adr, $\overline{ME}$) ainsi que des signaux de sélection (AK), à l'aide desquels, d'une part, des canaux parallèles d'une mémoire (SP), utilisée comme émetteur de données, ou récepteur de données peuvent être raccordés successivement au bus par l'intermédiaire de circuits de liaison associés commandables (SVi), et, d'autre part, le cycle du bus peut être prolongé par insertion d'états d'attente, caractérisé par le fait qu'il est prévu une mémorisation intermédiaire (ZSP), pour une ligne, des données devant être transmises, entre le bus (BUS) et la mémoire (K0 à K11, SP), et que les états d'attente (WZ) sont insérés de façon dynamique, c'est-à-dire après ou avant un changement d'adresse, dans chaque cycle de bus (BZ).

2. Procédé suivant la revendication 1, caractérisé par le fait que tous les canaux (K0 à K11) de la mémoire (SP) sont activés simultanément ($\overline{ME}$), après un changement de l'adresse de mémoire (Adr).

3. Procédé suivant la revendication 1 ou 2, caractérisé par le fait que dans le cas de l'utilisation de la mémoire (SP) en tant qu'émetteur de données, après un changement d'adresses de mémoire (Adr), les données devant être transmises de tous les canaux (K0 à K11) sont envoyées aux circuits de liaison commandables (SV0 à SV11, SVS), qui peuvent être raccordés ensuite au bus (BUS) à l'aide des signaux de sélection, et que les états d'attente (WZ) sont insérés directement après chaque changement de l'adresse de mémoire (Adr).

4. Procédé suivant la revendication 1 ou 2, caractérisé par le fait que dans le cas de l'utilisation de la mémoire (SP) en tant que récepteur de données, les données devant être transmises sont mémorisées temporairement dans des éléments de mémoire des circuits de liaison commandables (SVS0 à SVS11, SVS), et sont ensuite mémorisées successivement dans les canaux (K0 à K11) de la mémoire (SP), et que les états d'attente (WZ) sont insérés directement avant chaque changement de l'adresse de mémoire (Adr).

5. Procédé suivant l'une des revendications 1 à 4, caractérisé par le fait que dans le cas de l'utilisation de la mémoire (SP) en tant qu'émetteur de données, pendant la transmission du premier canal de données de chaque adresse de mémoire (Adr) ou lors de l'utilisation de la mémoire (SP) en tant que récepteur de données pendant la transmission du dernier canal de données de chaque adresse de mémoire (Adr), un signal de commande (BZAS, ST, ES) est produit, qui déclenche, dans un étage de mise en forme des impulsions (PZ) commandé par la cadence (C) et par le cycle de bus (BZ), l'introduction d'états d'attente (WZ) dans le signal d'état prêt (BS), pour la délivrance d'un signal d'état prêt (BS) pour la transmission de données.

6. Procédé suivant les revendications 1 à 5, caractérisé par le fait que le signal de commande (BZAS, BT) déclenche un compteur (PZ) commandé de façon cadencée qui, au bout d'un nombre de cycles de cadence (Z) correspondant aux états d'attente (WZ), envoie un signal de fin (ES) à l'étage (PF) de mise en forme des impulsions de sorte que pendant la durée de comptage, aucun signal d'état prêt (BS) ne peut être produit.

7. Dispositif pour la mise en oeuvre du procédé suivant l'une des revendications précédentes, caractérisé par le fait que le dispositif de commande (SE) est raccordé aux canaux (K0 à K11) de la mémoire (SP) par l'intermédiaire d'une ligne commune d'activation et aux circuits de liaison commandables (SV, SVS), qui peuvent prendre respectivement trois états commandables, par l'intermédiaire respectivement d'une ligne de sélection (AK), et que le dispositif de commande (SE) possède un étage (PF) de mise en forme des impulsions, commandé par la cadence (C) et par le cycle de bus (BZ), et comporte un compteur programmable (PZ) commandé de façon cadencée, lesquels sont raccordés au moyen d'une logique combinatoire (A1) de telle sorte que l'étage (PF) de mise en forme des impulsions ne peut délivrer aucun signal d'état prêt (BS) pendant la durée de comptage du compteur (PZ).

8. Dispositif suivant la revendication 7, caractérisé par le fait que dans le cas de l'utilisation de la mémoire (SP) en tant que récepteur de données, les circuits de liaison commandables (SVS0 à SVS11, SVS) possèdent chacun un élément de mémoire.

# FIG 1

EP 0 332 972 B1

# FIG 2

| BZ | 10 | 11 | 0 | 1 |
|----|----|----|---|---|

BS

WZ    0      0      m Taktzyklen      0

# FIG 4

| BZ | 10 | 11 | 0 | 1 |
|----|----|----|---|---|

BS

WZ    0      m Taktzyklen      0      0

# FIG 5

FIG 3